# EUROPEAN PATENT APPLICATION

(11) **EP 2 296 083 A2**
(43) Date of publication of application: **16.03.2011**
(21) Application number: 10175768.0
(22) Date of filing: 08.09.2010
(51) Int. Cl.: G06F 3/044, G06F 3/041

(54) **Electrostatic capacitive touch sensor**

(30) Priority: 11.09.2009 JP 2009210322
(71) Applicant: Alps Electric Co., Ltd., Tokyo 145-8501 (JP)
(72) Inventor: Nishijima, Akio, Tokyo 145-8501 (JP)
(74) Representative: Klunker . Schmitt-Nilson . Hirsch

(57) **Abstract**

An electrostatic capacitive touch sensor (1) is structured to switch the detection mode between a first detection mode in which the plural detection electrodes (2₁ to 2₄) are connected in parallel to serve as a unit of the detection electrodes for detecting an approaching object and a second detection mode in which the parallel connections of the plural detection electrodes (2₁ to 2₄) are released to individually detect the object approaching the respective detection electrodes (2₁ to 2₄).

## Description

### BACKGROUND OF THE INVENTION

### 1. Field of the Invention

The present invention relates to an electrostatic capacitive touch sensor for detecting an object to be sensed based on a change in an electrostatic capacitance.

### 2. Description of the Related Art

Recently, the electrostatic capacitive touch sensor has been employed for such electronic device as a car navigation device, a PND (Personal Navigation Device), a mobile phone, and a game machine. The electrostatic capacitive touch sensor capable of detecting an approaching operator's hand before performing its normal function as the touch sensor has been proposed.

Japanese Unexamined Patent Application Publication No. 2006-147519 proposes the electrostatic capacitive switch device which undisplays a detection part of the sensing electrode, which corresponds to the detection region when not in use in consideration of design. The electrostatic capacitive switch device has the sensing electrode (detection electrode), the displaying mask plate with a light transmission pattern indicating the switch position, and the backlight coated with a shielding material which exhibits a predetermined light transmittance. When the detection electrode detects the approaching object to be sensed based on the change in the electrostatic capacitance, the backlight is illuminated, and the light transmission pattern (switch position and the like) is highlighted on the shielding material.

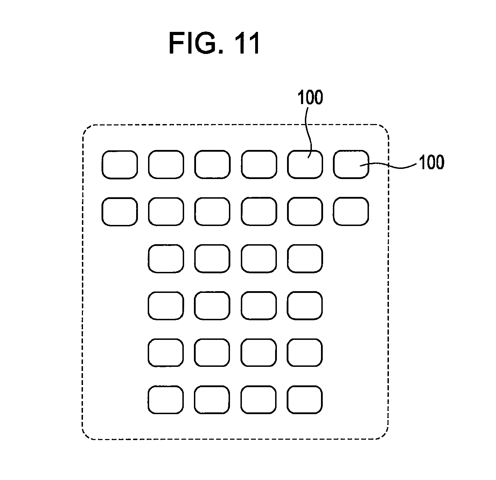

The touch sensor as illustrated in Fig. 11 is provided with a large number of detection regions (detection electrode 100) arranged on the small area, and accordingly, the size of the detection electrode has to be reduced. This may cause a disadvantage that the hand (object) cannot be detected until it becomes close to the point at a distance of several mms from the detection electrode. The threshold value may be lowered to improve the sensitivity for providing the solution of the aforementioned disadvantage, which is practically limited. Increase in the aforementioned distance may cause the risk of malfunction owing to disturbance.

### SUMMARY OF THE INVENTION

The present invention provides an electrostatic capacitive touch sensor with plural detection electrodes capable of extending an object detectable distance.

The electrostatic capacitive touch sensor according to the present invention includes plural detection electrodes, and control means for detecting an object approaching the detection electrodes based on detection outputs of the plural detection electrodes. A switching circuit is further provided for switching a detection mode between a first detection mode in which the plural detection electrodes connected in parallel are connected to the control means and a second detection mode in which the plural detection electrodes are individually connected to the control means. The control means detects the object approaching the detection electrodes by all the detection electrodes as a detection electrode unit in the first detection mode and controls the switching circuit to be driven to allow an individual detection of the object approaching the detection electrodes in the second detection mode.

In the aforementioned structure, the object is detected by all the plural detection electrodes connected in parallel in the first detection mode. This makes it possible to practically enlarge the detection area of the object to extend the object detectable distance for all the detection electrodes. Meanwhile, in the second detection mode, parallel connections among the plural detection electrodes are released to allow the individual detection electrode to detect the object which is approaching the respective detection electrodes, thus providing the normal function of the touch sensor.

In the electrostatic capacitive touch sensor, the control means may control the switching circuit to be driven to select the first detection mode when the object is in a detection standby state, and switches the detection mode from the first detection mode to the second detection mode after detecting the object in the first detection mode.

The structure allows the object apart from the detection electrodes to be detectable in the detection standby state, and further allows the individual detection electrodes to detect the adjacent object as the normal touch sensor function after detecting the object by all the detection electrodes.

In the electrostatic capacitive touch sensor, auxiliary detection electrodes may be disposed at outer sides of the plural detection electrodes, and the auxiliary detection electrodes and the plural detection electrodes connected in parallel in the first detection mode form a unit of the detection electrodes to detect the object approaching the detection electrodes.

In the structure, the unit of the detection electrodes includes the plural detection electrodes and auxiliary detection electrodes disposed at outer sides of those detection electrodes in the first detection mode. This makes it possible to further enlarge the detection area, and extend the object detectable distance for detecting the object apart from the unit of the detection electrodes. Besides extension of the detectable distance, the detectable area may be expanded. This makes it possible to detect the operator's hand at an earlier stage.

In the electrostatic capacitive touch sensor, plural detection electrode units each including the detection electrode and the auxiliary detection electrode may be provided. The detection electrode units are provided so that the detection electrodes and the auxiliary detection electrodes of the detection electrode units are oppositely disposed.

In the structure, the detection electrodes of the respective detection electrode units are oppositely disposed, and the auxiliary detection electrodes at outer sides of the detection electrodes are disposed apart from one another. The detection electrode unit which has detected the object may be identified by the auxiliary detection electrodes disposed at outer sides through detection of the object.

The present invention is capable of extending the object detectable distance covered by the unit of the detection electrodes without deteriorating accuracy of the respective detection electrodes for detecting the object irrespective of plural detection electrodes.

### BRIEF DESCRIPTION OF THE DRAWINGS

Fig. 1 is a circuit diagram schematically illustrating a part of an electrostatic capacitive touch sensor according to a first embodiment of the present invention;
Fig. 2 is a view of an appearance of a part where detection electrodes of the electrostatic capacitive touch sensor as shown in Fig. 1 are disposed;
Fig. 3 is a sectional view taken along line III-III of Fig. 2;
Fig. 4 is a circuit diagram schematically illustrating a part of the electrostatic capacitive touch sensor shown in Fig. 1;
Fig. 5 is a basic circuit diagram of an electrostatic capacitive touch sensor taken as an example for explaining the basic principle of the electrostatic capacitive touch sensor;
Figs. 6A to 6E illustrate operation waveform diagrams of the basic circuit shown in Fig. 5;
Fig. 6F represents AD outputs both in normal and approaching cases;
Fig. 7 is a flowchart for explaining operations of the electrostatic capacitive touch sensor according to the embodiment;
Fig. 8 is a view illustrating an appearance of a part where detection electrodes of an electrostatic capacitive touch sensor according to a second embodiment of the present invention are arranged;
Fig. 9 is a circuit diagram schematically showing a structure of a part of the electrostatic capacitive touch sensor shown in Fig. 8;
Figs. 10A and 10B show each operation portion of electrostatic capacitive touch sensors as modified examples; and
Fig. 11 is a view illustrating an operation portion of the electrostatic capacitive touch sensor.

### DESCRIPTION OF THE PREFERRED EMBODIMENTS

Embodiments of the present invention will be described referring to the drawings. An electrostatic capacitive touch sensor according to the embodiments provided with plural detection electrodes detects an approaching object based on the change in the electrostatic capacitance formed by all the plural detection electrodes, and further detects the object adjacent to the individual detection electrodes. The electrostatic capacitive touch sensor may be applied to an input display device of the car navigation device, the mobile phone, and the game machine, for example. The application to the input display device of the car navigation device will be described as an example hereinafter.

Referring to Fig. 11, plural detection electrodes 100 are arranged in parallel on the electromagnetic capacitive touch sensor according to the embodiment of the present invention. Those detection electrodes 100 are structured to serve as input display equipment for executing the respective operation portions built in the car navigation device. The electrostatic capacitive touch sensor may be structured to have the respective detection electrodes (portion corresponding to the detection region) 100 undisplayed when not in use for detecting the object in consideration of design and suppression of power consumption. The touch sensor having the detection electrodes 100 undisplayed when not in use for detecting the object will be described hereinafter.

### (First Embodiment)

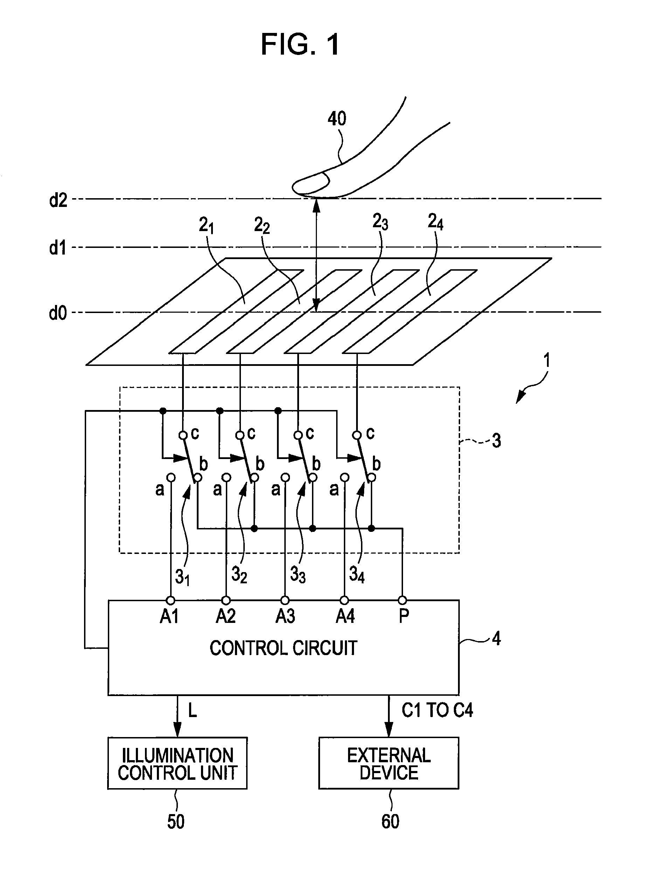

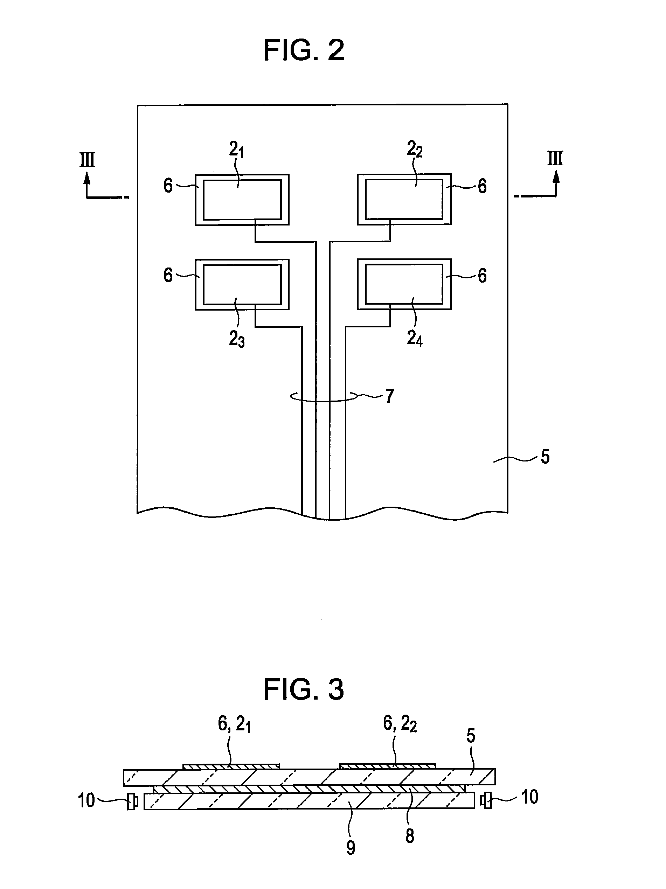

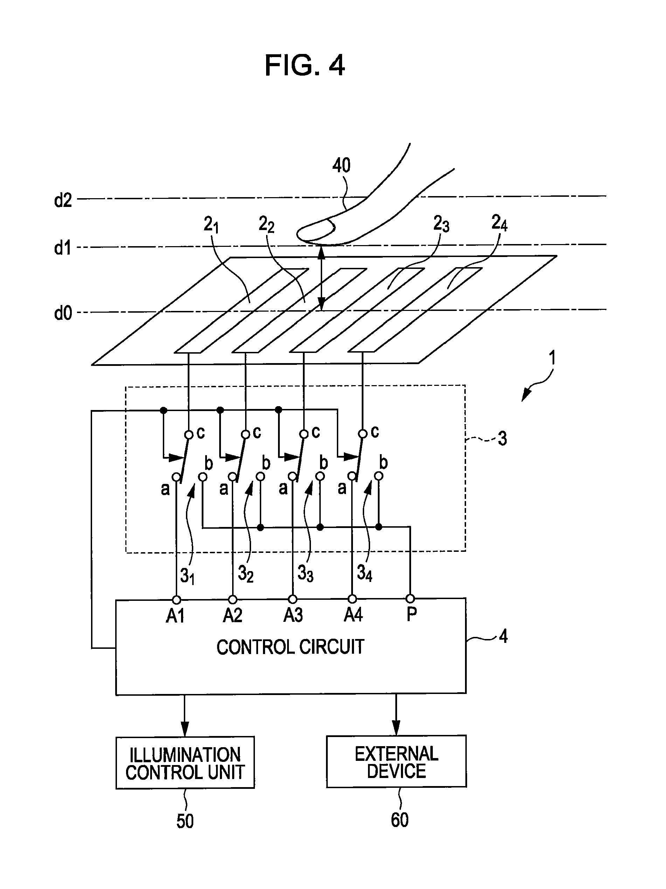

Fig. 1 is a circuit diagram schematically showing a structure of a part of the electrostatic capacitive touch sensor according to a first embodiment of the present invention. Fig. 2 is a plan view illustrating an arrangement of the detection electrodes of the electrostatic capacitive touch sensor according to the embodiment. Fig. 3 is a sectional view taken along line III-III of Fig. 2. Fig. 4 is a circuit diagram schematically illustrating a part of the electrostatic capacitive touch sensor according to the embodiment. Fig. 1 illustrates a state where the respective detection electrodes are connected in parallel. Fig. 4 illustrates a state where the parallel connections among the respective detection electrodes are released.

Referring to Fig. 1, a car navigation device having the electrostatic capacitive touch sensor 1 according to the embodiment applied to an input display device is formed of the electrostatic capacitive touch sensor 1, and an illumination control unit 50 and an external device 60 both of which are connected to the electrostatic capacitive touch sensor 1.

The electrostatic capacitive touch sensor 1 includes four detection electrodes 2₁ to 2₄ disposed on the display screen, a switching circuit 3, and a control circuit 4. The electrostatic capacity touch sensor 1 is structured to allow the switching circuit 3 and the control circuit 4 to control a switching operation between a full detection state (first detection mode) and an individual detection state (second detection mode). In the full detection state, the plural (four) detection electrodes 2₁ to 2₄ connected in parallel are connected to the control circuit 4 to detect an object 40 as a single electrode formed of all the detection electrodes. In the individual detection state, the parallel connections among the detection electrodes 2₁ to 2₄ are released, and each of those electrodes is connected to the control circuit 4 so as to detect the object 40 individually. As shown in Fig. 1, four detection electrodes 2 are employed. However, the number of the detection electrodes to be employed is not limited.

Referring to Fig. 2, the detection electrodes 2₁ to 2₄ are disposed on four print display portions 6 arranged in a matrix of 2 x 2, respectively on a transparent panel 5. Each of the respective detection electrodes 2₁ to 2₄ is formed of a transparent material which allows transmission of light rays such as ITO (Indium Tin Oxide), and connected to one end of a wiring 7. The other end of the wiring 7 is connected to one end (common terminal c) of a contact of the switching circuit 3.

Referring to Fig. 3, an electrode wiring sheet 8 is formed on a surface of the transparent panel 5, which is opposite the other surface on which the detection electrodes 2₁ to 2₄ are disposed. A backlight plate 9 is formed on a surface of the electrode wiring sheet 8 in tight contact therewith, which is opposite the other surface in contact with the transparent panel 5. LEDs (Light-Emitting Diode) 10 are disposed adjacent to opposite side surfaces of the backlight plate 9. In the case where the object is detected by the detection electrode unit of the electrostatic capacitive sensor 1, an illumination control signal L is sent from the illumination control unit 50 such that light rays from the respective LEDs 10 are radiated from the front surface of the transparent panel 5 through the backlight plate 9.

Referring to Fig. 1, the switching circuit 3 provided with four selector switches 3₁ to 3₄ selects the detection state between the full detection state where the detection electrodes 2₁ to 2₄ connected in parallel are connected to the control circuit 4 based on the control signal from the control circuit 4 and the individual detection state where the parallel connections among the detection electrodes 2₁ to 2₄ are released to allow the individual detection electrode to be connected to the control circuit 4. Each of the respective selector switches 3₁ to 3₄ is formed of two fixed contacts a, b, and a common terminal c. The fixed contacts a are individually connected to respective input terminals A1 to A4 of the control circuit 4. The fixed contacts b are commonly connected to an input terminal P of the control circuit 4. The common terminals c are connected to the detection electrodes 2₁ to 2₄, respectively. As illustrated in Fig. 1, in the full detection state, the common terminals c and the fixed contacts b are connected, and the detection electrodes 2₁ to 2₄ are connected in parallel so as to be connected to the input terminal P of the control circuit 4. Meanwhile, in the individual detection state as illustrated in Fig. 4, the common terminals c and the fixed contacts a are connected such that the detection electrodes 2₁, 2₂, 2₃ and 2₄ are connected to the input terminals A1, A2, A3 and A4, respectively.

The control circuit 4 executes the control operation for selecting the detection state between the full detection state where the detection electrodes 2₁ to 2₄ are connected in parallel to detect an object 40 as the detection electrode unit and the individual detection state where the parallel connections among the detection electrodes 2₁ to 2₄ are released to allow each of the detection electrodes 2₁ to 2₄ to detect the object 40 individually in accordance with a change in the electrostatic capacitance between the detection electrode 2 and the object 40. In this case, preferably, the control circuit 4 selects the full detection state when the object 40 is in the standby state for detection, and the detection state is then switched to the individual detection state after detecting the object 40 in the full detection state. This allows all the detection electrodes to equivalently function as a single capacitor electrode so as to detect the remotely positioned object 40. After detecting the object 40 by the unit of the detection electrodes, the respective detection electrodes 2₁ to 2₄ are allowed to individually detect the adjacent object 40 as a normal tough sensor.

Specifically, in the detection standby state (initial state), the control circuit 4 selects the full detection state where the detection electrodes 2₁ to 2₄ are connected in parallel to detect the object 40 as the detection electrode unit. When the detection output of all the detection electrodes in the full detection state, that is, the combined output of detections performed by the detection electrodes 2₁ to 2₄ (output corresponding to the electrostatic capacitance) exceeds a threshold value for full adjacent detection (first threshold value Sp), the control circuit 4 outputs an illumination control signal L (first control signal) to the illumination control unit 50. The first threshold value Sp corresponds to the electrostatic capacitance at a position apart from each location d0 of the detection electrodes 2₁ to 2₄ in the full detection state by a distance of d2. Upon reception of the illumination control signal L from the illumination control unit 50, the LEDs 10 are activated to illuminate the print display portion 6 on the transparent panel 5.

When the detection output of all the detection electrodes in the full detection state exceed the first threshold value Sp (that is, when the object is detected in the full detection state), the control circuit 4 executes the control operation for driving the switching circuit 3 to switch the detection state from the full detection state to the individual detection state. When the individual detection outputs from the respective detection electrodes 2₁ to 2₄ in the individual detection states exceed a threshold value for individual contact detection (second threshold value Sa), individual control signals C1 to C4 (second control signals) corresponding to the respective detection electrodes 2₁ to 2₄ are output to the external device 60. The second threshold value Sa corresponds to the electrostatic capacitance at a position apart from a location d0 of the detection electrodes 2₁ to 2₄ in the individual detection state by a distance d1 (<d2).

In the individual detection state, normally, the detection output from any one of the detection electrodes 2₁ to 2₄ exceeds the second threshold value Sa, and accordingly, one of the individual control signals C1, C2, C3 and C4, which corresponds to the detection output is output. In other words, the object 40 or the finger is approaching or contacts any one of the detection electrodes 2₁ to 2₄. Then one of the individual control signals C1, C2, C3 and C4, which corresponds to the detection output of the adjacent or touched detection electrode is output. The control circuit 4 includes a not shown timer so as to return the detection state to the detection standby state, that is, full detection state after individual input or an elapse of a predetermined time while having no individual input. After returning the detection state to the full detection state, the control circuit 4 transmits the illumination control signal L to the illumination control unit 50 for turning the illumination OFF.

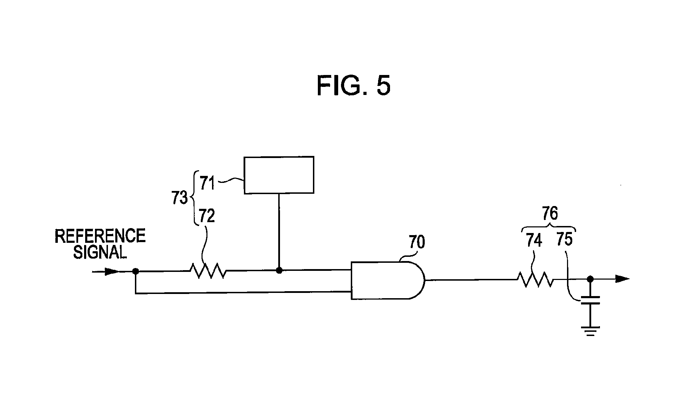

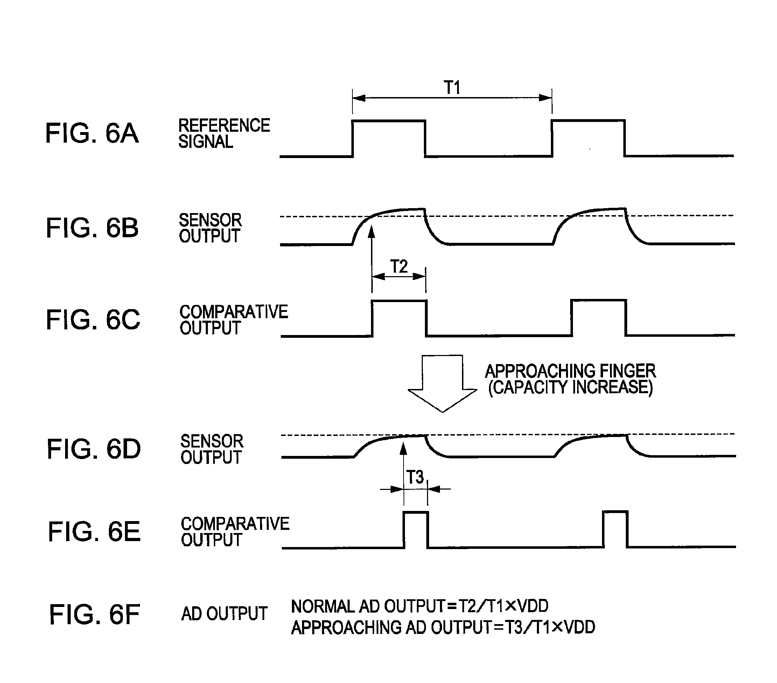

A basic principle of the electrostatic capacitive touch sensor 1 to detect the object will be described. Fig. 5 illustrates a basic circuit of the electrostatic capacitive touch sensor 1. Figs. 6A to 6E illustrate operation waveform diagrams of the basic circuit shown in Fig. 5. Referring to Fig. 5, an RC integral circuit (sensor circuit) 73 formed of a detection electrode 71 and a resistance 72 is connected to one input terminal of a 2-input AND circuit 70. Then a reference signal is input via the sensor circuit 73. The reference signal is directly input to the other input terminal of the AND circuit 70. The signal with rectangular wave as illustrated in Fig. 6A is input as the reference signal.

The reference signal with the rectangular waveform is input to shape the waveform of the sensor output to the integral waveform which causes the output delay as illustrated in Fig. 6B. The AND circuit 70 compares the sensor output with the integral waveform with the reference signal, and outputs "H" for a period for which the sensor output exceeds the reference signal (see Fig. 6C). A time period T2 for which the output of the AND circuit 70 becomes "H" is reduced as the increase in the electrostatic capacitance of the sensor circuit 73 (see T3 as illustrated in Figs. 6D and 6E). That is, the electrostatic capacitance of the sensor circuit 73 increases as the finger approaches the detection electrode 71. The output as illustrated in Fig. 6C is assumed to be observed in a standard period for which the finger is kept away from the detection electrode 71.

An integral circuit 76 formed of a resistance 74 and a capacitor 75 is connected to an output side of the AND circuit 70. The output of the integral circuit 76 (AD output shown in Fig. 6F) is set to T2/T1xVDD in the standard time for which the hand is kept away from the detection electrode 71. When the hand is approaching near the detection electrode 71, the output is set to T3/T1xVDD. The difference in the AD output is detected as approaching of the hand.

The illumination control unit 50 controls illumination of the LED 10 based on the detection output of the electrostatic capacitive touch sensor 1. The illumination control unit 50 turns the LED 10 ON upon reception of the illumination control signal L output from the control circuit 4 for turning the light ON, and turns the LED 10 OFF upon reception of the illumination control signal L for turning the light OFF. When the finger 40 approaches the unit of the detection electrodes to bring the distance between the finger and the detection electrodes 2₁ to 2₄ to d2, the illumination control signal L for ON output from the control circuit 4 is received by the illumination control unit 50 to turn the LED 10 ON. In accordance with the individual control signals C1 to C4 output from the control circuit 4, the external device 60 controls execution of the respective functions installed in the car navigation device.

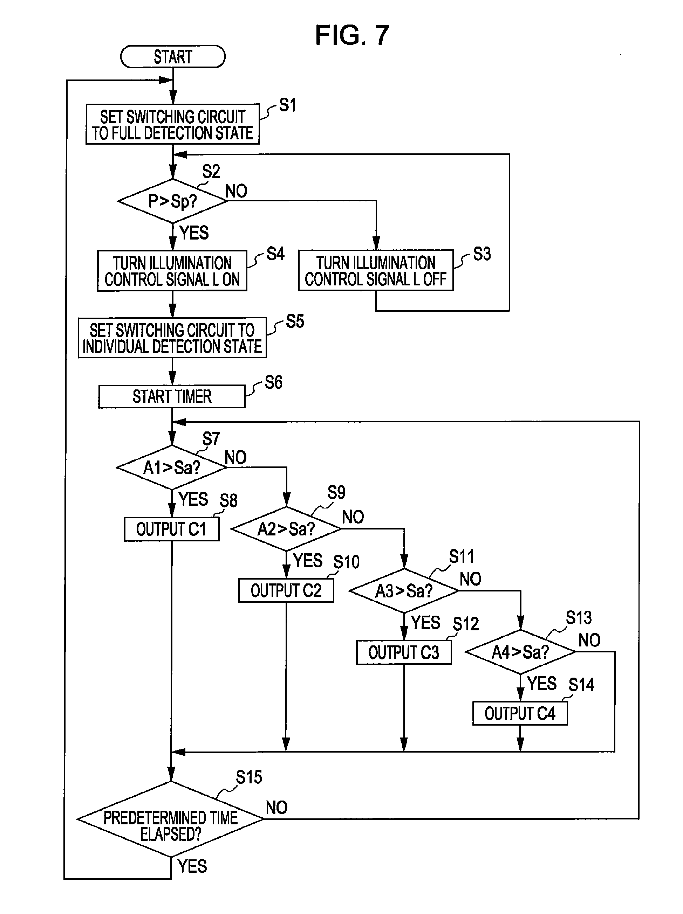

Referring to the flowchart of Fig. 7, operations of the electrostatic capacitive touch sensor 1 will be described. In the detection standby state, the control circuit 4 controls the switching circuit 3 to select the full detection state (step 1). Then it is determined whether the combined detection output of the parallel connected detection electrodes 2₁ to 2₄ (combined detection output at the input terminal P) exceeds the first threshold value Sp (step S2). If the combined detection output of the detection electrodes 2₁ to 2₄ does not exceed the first threshold value Sp, the illumination control signal L is turned OFF (step S3). Then the process returns to determination in step S2. The process in steps S2 and S3 is repeatedly executed until the combined detection output of the detection electrodes 2₁ to 2₄ exceeds the first threshold value Sp.

Meanwhile, when the combined detection output of the parallel connected detection electrodes 2₁ to 2₄ exceeds the first threshold value Sp, the control circuit 4 turns the illumination control signal L ON (step S4), and the detection state of the switching circuit 3 is selected from the full detection state to the individual detection state (step S5). After selecting the individual detection state, the timer is started (step S6). It is determined whether the input to the input terminal A1 exceeds the second threshold value Sa (step S7). When the input to the input terminal A1 exceeds the second threshold value Sa, the individual control signal C1 is output (step S8). When the input to the input terminal A1 does not exceed the second threshold value Sa, it is determined whether the input to the input terminal A2 exceeds the second threshold value Sa (step S9). When the input to the input terminal A2 exceeds the second threshold value Sa, the individual control signal C2 is output (Step S10). When the input to the input terminal A2 does not exceed the second threshold value Sa, it is determined whether the input to the input terminal A3 exceeds the second threshold value Sa (step S11). When the input to the input terminal A3 exceeds the second threshold value Sa, the individual control signal C3 is output (step S12). When the input to the input terminal A3 does not exceed the second threshold value Sa, it is determined whether the input to the input terminal A4 exceeds the second threshold value Sa (step S13). When the input to the input terminal A4 exceeds the second threshold value Sa, the individual control signal C4 is output (step S14).

It is determined whether predetermined time has elapsed after determination executed in any one of steps S7, S9, S11 and S13 to output the corresponding signal of any one of the individual control signals C1, C2, C3 and C4 (step S15). When the predetermined time has not elapsed, the process returns to step S7, and the process in step S7 and subsequent steps will be executed repeatedly. Upon elapse of the predetermined time, the process returns to step S1 to execute the process from the beginning.

The electrostatic capacitive touch sensor 1 of the embodiment is structured to switch the detection state between the full detection state where the plural detection electrodes 2₁ to 2₄ are connected in parallel as the single capacitor electrode to detect the approaching object and the individual detection state where the parallel connections among the plural detection electrodes 2₁ to 2₄ are released to allow each of the detection electrodes 2₁ to 2₄ to detect the approaching object individually. In the full detection state, the parallel connected plural detection electrodes 2₁ to 2₄ are allowed to serve as the single capacitor electrode for detecting the object. This makes it possible to extend the object detectable distance covered by all the detection electrodes by practically enlarging the area for detecting the object. In the individual detection state, the parallel connections among the plural detection electrodes 2₁ to 2₄ are released to allow each of the detection electrodes of 2₁ to 2₄ to individually detect the approaching object as a normal touch sensor. In other words, the control circuit 4 and the switching circuit 3 select the detection state between the full detection state and the individual detection state to extend the object detectable distance covered by all the detection electrodes, and to make the object apart from the unit of the detection electrodes detectable. Furthermore, it is capable of serving as the normal touch sensor which allows each of the respective detection electrodes 2₁ to 2₄ to detect the approaching object, individually.

### (Second Embodiment)

A second embodiment according to the present invention will be described. An electrostatic capacitive touch sensor according to the second embodiment of the present invention is substantially the same as the electrostatic capacitive touch sensor 1 according to the first embodiment except an added auxiliary detection electrode for the full detection state, and a structure of the switching circuit. The different features of the embodiment will only be described. The same codes will be used for explaining the same structure, and explanations thereof, thus will be omitted.

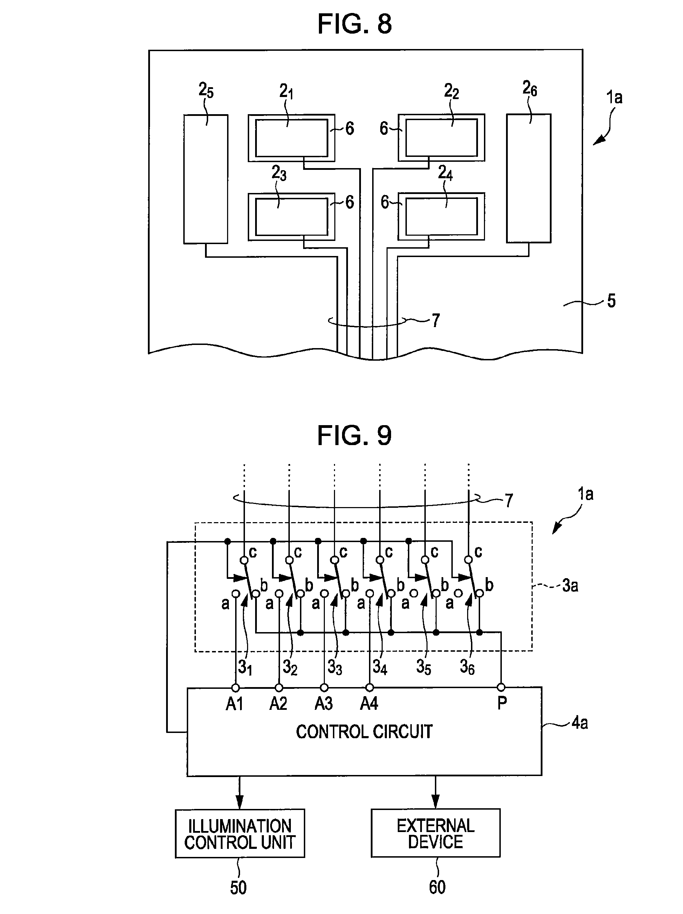

Fig. 8 is a plan view showing an exemplary arrangement of the detection electrodes of the electrostatic capacitive touch sensor according to the second embodiment of the present invention. Fig. 9 illustrates contact states of the respective terminals in the full detection state.

Referring to Figs. 8 and 9, an electrostatic capacitive touch sensor 1a of the embodiment includes four detection electrodes 2₁ to 2₄, a pair of auxiliary detection electrodes 2₅ and 2₆ respectively disposed at outer sides of the detection electrodes 2₁ to 2₄, a switching circuit 3a, and a control circuit 4a. Likewise the structure of the electrostatic capacitive touch sensor 1 according to the first embodiment, the detection electrodes 2₁ to 2₄ are disposed on the respective four print display portions 6 in a matrix of 2 x 2 on the transparent panel 5. The auxiliary detection electrodes 2₅ and 2₆ for full detection serve to detect the object in cooperation with the detection electrodes 2₁ to 2₄ in the full detection state, and are disposed to interpose those detection electrodes 2₁ to 2₄ between the left and right sides. Likewise the detection electrodes 2₁ to 2₄, the auxiliary detection electrodes 2₅ and 2₆ are connected to the switching circuit 3a via the wiring 7. Two detection electrodes are used as the auxiliary detection electrodes 2₅ and 2₆ as shown in Fig. 8, which are disposed at left and right sides of the detection electrodes 2₁ to 2₄. However, the arrangement of the detection electrodes 2₅ and 2₆ is not limited to the one as described above. For example, they may be disposed around the detection electrodes 2₁ to 2₄. Each of the detection electrodes 2₁ to 2₄ is formed of the transparent material such as ITO, which allows transmission of light rays. However, each of the auxiliary detection electrodes 2₅ and 2₆ does not have to be formed of the transparent material.

Referring to Fig. 9, the switching circuit 3a includes six selector switches 3₁ to 3₆, and switches the detection state between the full detection state for connecting the detection electrodes 2₁ to 2₄ and the auxiliary detection electrodes 2₅ and 2₆ in parallel so as to be connected to the control circuit 4a, and the individual detection state for connecting the individual detection electrodes 2₁ to 2₄ to the control circuit 4a based on the control signal from the control circuit 4a. Each of the selector switches 3₁ to 3₆ is formed of two fixed contacts a and b, and the common terminal c. Only the fixed contacts a of the selector switches 3₁ to 3₄ among those of 3₁ to 3₆ are individually connected to input terminals A1 to A4 of the control circuit 4a. The fixed contacts b of the respective selector switches 3₁ to 3₆ are all connected to the input terminal P of the control circuit 4a. The common terminals c are connected to the detection electrodes 2₁ to 2₆, respectively. Referring to Fig. 9, in the full detection state, the respective common terminals c are connected to the fixed contacts b of the selector switches 3₁ to 3₆, and the detection electrodes 2₁ to 2₄ and the auxiliary detection electrodes 2₅ and 2₆ which are connected in parallel are connected to the input terminal P of the control circuit 4a.

Meanwhile, in the individual detection state, the common terminals c and the fixed contacts a of the selector switches 3₁ to 3₄ are connected, and the common terminals c of the selector switches 3₅ and 3₆ are not connected to the fixed contacts a while being kept in free state. In this way, the detection electrodes 2₁ to 2₄ are connected to the input terminals A1 to A4, or the input terminal P of the control circuit 4a. The auxiliary detection electrodes 2₅ and 2₆ are only connected to the input terminal P. That is, the auxiliary detection electrodes 2₅ and 2₆ are structured to function in further enlarging the area of the whole detection electrodes only in the full detection state so as to improve the sensitivity.

The electrostatic touch sensor 1a of the embodiment is provided with the auxiliary detection electrodes 2₅ and 2₆ disposed at outer sides of the plural detection electrodes 2₁ to 2₄. The auxiliary detection electrodes 2₅ and 2₆ form the unit of the detection electrodes together with the plural detection electrodes 2₁ to 2₄ in the full detection state so as to detect the object approaching the unit of the detection electrode. The full detection state allows extension of the object detectable distance, and detection of the object apart from the detection electrode unit by further enlarging the detection area. This makes it possible not only to extend the detectable distance but also to enlarge the detectable area, and further to detect the hand of the operator approaching from the lateral direction at the earlier stage.

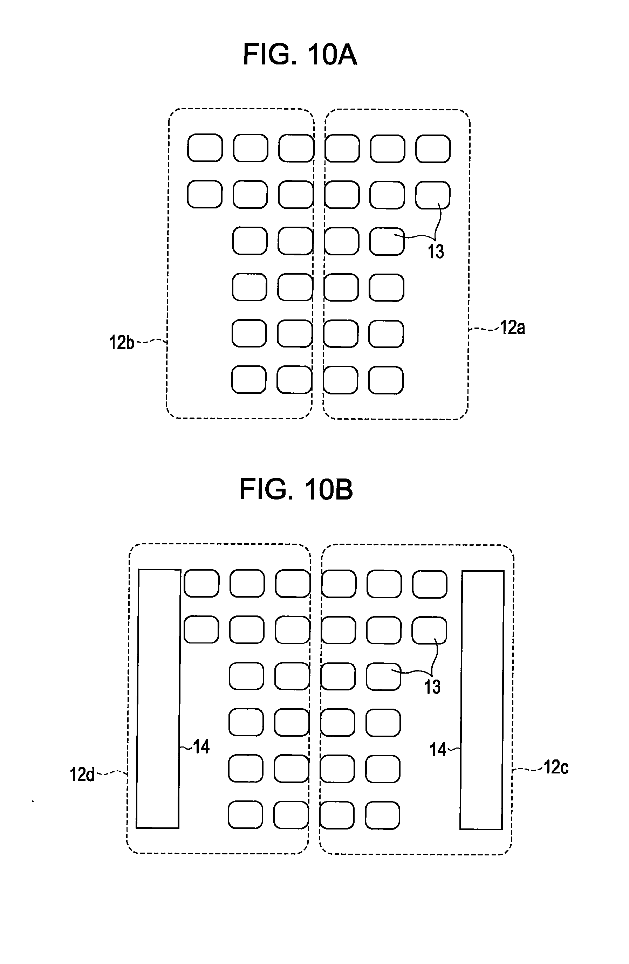

In the first embodiment, the detection electrodes 2₁ to 2₄ are formed as the single detection electrode unit so as to switch the detection state between the full detection state and the individual detection state. The structure, however, is not limited to the one as described above. For example, in the case where a large number of detection electrodes make the operation area too large to manually handle, the number of connections of the detection electrodes is changed to divide the entire detection electrodes into plural detection electrode units. Fig. 10A graphically shows that plural detection electrodes 13 for forming the electrostatic capacitive touch sensor are divided into two detection electrode units 12a and 12b. The electrostatic capacitive touch sensor as illustrated in Fig. 10 is provided with two detection electrode units 12a and 12b at left and right sides. The respective detection electrode units 12a and 12b are structured to switch the detection state between the full detection state and the individual detection state. Among those two detection electrode units 12a and 12b, if the object is approaching from the right, all the detection electrodes as the detection electrode unit 12a serve to detect the object. It is therefore possible to estimate the approaching direction of the object by identifying the detection electrode unit 12a which has detected the object.

Referring to Fig. 10B, the detection electrode units 12c and 12d may be structured to have the detection electrodes 13 and the auxiliary detection electrodes 14. In such a case, preferably the detection electrodes 13 of the detection electrode unit 12c are arranged opposite those detection electrodes 13 of the detection electrode unit 12d. In this structure, the detection electrodes 13 of the detection electrode units 12c and 12d are oppositely arranged, and the auxiliary detection electrodes 14 at outer sides of the detection electrodes 13 are disposed to be apart from each other. The detection electrode unit 12c which has detected the object may be identified when the auxiliary detection electrodes 14 located at outer sides detect the object.

The embodiment as disclosed herein is regarded as the example, and should not be limited to the embodiment as described above. The scope of the present invention is not limited to the embodiment, but defined by claims. It is to be understood that the invention may be changed in the arbitrary form so long as it is equivalent to the claims.

The present invention is applicable to the electronic device such as a car navigation device, the PND, the mobile phone, PDA, and the game machine.

## Claims

1. An electrostatic capacitive touch sensor provided with plural detection electrodes (2₁, 2₂, 2₃, 2₄), and control means (4) for detecting an object approaching the detection electrodes (2₁, 2₂, 2₃, 2₄) based on detection outputs of the plural detection electrodes (2₁, 2₂, 2₃, 2₄), **characterized in that**:
a switching circuit (3) is further provided for switching a detection mode between a first detection mode in which the plural detection electrodes (2₁, 2₂, 2₃, 2₄) connected in parallel are connected to the control means (4) and a second detection mode in which the plural detection electrodes (2₁, 2₂, 2₃, 2₄) are individually connected to the control means (4); and
the control means (4) detects the object approaching the detection electrodes (2₁, 2₂, 2₃, 2₄) by all the detection electrodes (2₁, 2₂, 2₃, 2₄) as a detection electrode unit in the first detection mode and controls the switching circuit (3) to be driven to allow an individual detection of the object approaching the detection electrodes (2₁, 2₂, 2₃, 2₄) in the second detection mode.

2. The electrostatic capacitive touch sensor according to Claim 1, **characterized in that** the control means (4) controls the switching circuit (3) to be driven to select the first detection mode when the object is in a detection standby state, and switches the detection mode from the first detection mode to the second detection mode after detecting the object in the first detection mode.

3. The electrostatic capacitive touch sensor according to Claim 1 or 2, **characterized in that**:
auxiliary detection electrodes (2₅, 2₆) are disposed at outer sides of the plural detection electrodes (2₁, 2₂, 2₃, 2₄); and
the auxiliary detection electrodes (2₅, 2₆) and the plural detection electrodes (2₁, 2₂, 2₃, 2₄) connected in parallel in the first detection mode form a unit of the detection electrodes (2₁, 2₂, 2₃, 2₄) to detect the object approaching the detection electrodes (2₁, 2₂, 2₃, 2₄).

4. The electrostatic capacitive touch sensor according to Claim 3, **characterized in that**:
plural detection electrode units (12c, 12d) each including the detection electrode (13) and the auxiliary detection electrode (14) are provided; and
the detection electrode units (12c, 12d) are provided so that the detection electrodes (13) and the auxiliary detection electrodes (14) of the detection electrode units (12c, 12d) are oppositely disposed.
